# EUROPÄISCHE PATENTANMELDUNG

(11) **EP 4 140 860 A1**
(43) Veröffentlichungstag der Anmeldung: **01.03.2023**
(21) Anmeldenummer: 22182834.6
(22) Anmeldetag: 04.07.2022
(51) Int. Cl.: B62D 25/04

(54) **FAHRZEUG MIT SEITENTÜR, TÜRBRÜSTUNGSROHR UND IN FAHRZEUGLÄNGSRICHTUNG HINTER DER SEITENTÜR ANGEORDNETER B-SÄULE**

(30) Priorität: 31.08.2021 DE 102021209565
(71) Anmelder: VOLKSWAGEN AG, 38440 Wolfsburg (DE)
(72) Erfinder: Bartels, Carl, 57439 Attendorn (DE); Schümann, Vincent, 38518 Gifhorn (DE); Egger, Herbert, 5730 Mittersill (AT)

(57) **Zusammenfassung**

Die Erfindung betrifft ein Fahrzeug mit einer Fahrzeugkarosserie, die zumindest eine Seitentür (12) mit einem an der Seitentür (12) befestigten Türbrüstungsrohr (22) und eine im Wesentlichen vertikal ausgerichtete B-Säule (16) aufweist, wobei die B-Säule (16) beabstandet von der Seitentür (12) in Fahrzeuglängsrichtung (x-Richtung) betrachtet hinter der Seitentür (12) angeordnet ist, wobei an der B-Säule (16) ein in Fahrzeuglängsrichtung (x-Richtung) nach vorne in Richtung der Seitentür (12) hervorragendes Formschlusselement (50) vorgesehen ist, welches derart dimensioniert und angeordnet ist, dass das Formschlusselement (50) bei einer crashbedingten Verlagerung des Türbrüstungsrohres (22) in Fahrzeuglängsrichtung (z-Richtung) nach hinten von einem rückseitigen Ende (36) des Türbrüstungsrohres (22) mindestens teilweise umschließbar ist, um ein seitliches Abgleiten des Türbrüstungsrohres (22) in Fahrzeugquerrichtung (y-Richtung) zu verhindern

## Beschreibung

Die Erfindung betrifft ein Fahrzeug, insbesondere ein Kraftfahrzeug mit einer Fahrzeugkarosserie, die zumindest eine Seitentür mit einem an der Seitentür befestigten Türbrüstungsrohr und eine im Wesentlichen vertikal ausgerichtete B-Säule aufweist. Dabei ist die B-Säule beabstandet von der Seitentür in Fahrzeuglängsrichtung betrachtet hinter der Seitentür angeordnet ist. Die Seitentür ist zum Öffnen und Schließen insbesondere verschwenkbar an der Fahrzeugkarosserie angeordnet. Bei dem Türbrüstungsrohr handelt es sich insbesondere um ein im Wesentlichen parallel zu der unteren Fensterlinie angeordnetes Rohr, das unterhalb einer Seitenscheibe der Seitentür innerhalb der Seitentür angeordnet ist. Das Türbrüstungsrohr erstreckt sich vorzugsweise in Fahrzeuglängsrichtung bis an eine die Seitentür rückseitig begrenzende Querwand, welche im Bereich des hinteren Endes der Seitentür vor der B-Säule angeordnet ist.

Aus JP 2002-347441 A ist ein Fahrzeug mit einer Fahrzeugkarosserie bekannt, das eine Seitentür und mindestens eine vertikal ausgerichtete A-Säule aufweist, gegenüber welcher die Seitentür verschwenkbar gelagert ist. In dem Dokument ist eine Anordnung offenbart, welche den Übergangsbereich zwischen der A-Säule und der Seitentür betrifft. Der Bereich des hinteren Endes der Seitentür oder der B-Säule des Fahrzeuges ist nicht im Detail beschrieben.

Aus FR 2 966 794 A1 ist ein Fahrzeug mit einer Fahrzeugkarosserie bekannt, das eine Seitentür mit einem Versteifungselement und einem in Fahrzeuglängsrichtung vor dem Versteifungselement angeordneten Verstärkungsblech. Bei dieser Fahrzeugkarosserie ist in dem Verstärkungsblech eine Lasche ausgestanzt und derart in Fahrzeuglängsrichtung nach hinten in Richtung des vorderen Endes des Versteifungselements herausgebogen, dass sich die Lasche in Einbaulage in den Bereich erstreckt, der sich in Fahrzeugquerrichtung unmittelbar neben dem vorderen Ende des Versteifungselements befindet. Der Bereich des hinteren Endes des Versteifungselements, des hinteren Endes der Seitentür oder der B-Säule des Fahrzeuges ist weder gezeigt noch beschrieben.

Aus DE 10 2017 217 095 A1 ist ein Fahrzeug mit einer Fahrzeugkarosserie bekannt, das eine Seitentür und mindestens eine vertikal ausgerichtete A-Säule aufweist, gegenüber welcher die Seitentür verschwenkbar gelagert ist. Dabei soll eine als ein der A-Säule zugeordnetes Blockiermittel dienende Schraube an der Seitentür oder an der A-Säule verschraubt sein, um den Abstand zwischen Seitentür und Säule zu verringern und bei einer Verlagerung der Seitentür in Richtung der A-Säule eine formschlüssige Verbindung zwischen Seitentür und A-Säule herzustellen. Der Bereich des hinteren Endes der Seitentür oder der B-Säule des Fahrzeuges nicht im Detail beschrieben.

Aus der Praxis sind Fahrzeuge mit Seitentür und Türbrüstungsrohr gemäß dem Oberbegriff des Anspruchs 1 bekannt. Das Türbrüstungsrohr soll im Frontcrashfall, insbesondere bei geringer Überdeckung mit einem Hindernis (small overlap crash), dazu vorgesehen sein, eine Abstützfunktion zwischen der A-Säule und er B-Säule übernehmen. Die Abstützfunktion kann nicht mehr erfüllt werden, wenn das Türbrüstungsrohr während des Crashs in Fahrzeugquerrichtung nach außen an der B-Säule abgleitet.

Der Erfindung liegt die Aufgabe zugrunde, ein aus der Praxis bekanntes Fahrzeug gemäß dem Oberbegriff des Anspruchs 1 so zu verbessern, dass im Falle eines Frontcrashs auf einfache und kostengünstige Art und Weise einem Abgleiten des Türbrüstungsrohres gegenüber der B-Säule entgegengewirkt wird.

Die Lösung der Aufgabe erfolgt erfindungsgemäß mit den Merkmalen der unabhängigen Ansprüche. Weitere praktische Ausführungsformen und Vorteile der Erfindung sind in Verbindung mit den abhängigen Ansprüchen beschrieben.

Ein erfindungsgemäßes Fahrzeug umfasst eine Fahrzeugkarosserie, die zumindest eine Seitentür mit einem an der Seitentür befestigten Türbrüstungsrohr und eine im Wesentlichen vertikal ausgerichtete B-Säule aufweist, wobei die B-Säule beabstandet von der Seitentür in Fahrzeuglängsrichtung betrachtet hinter der Seitentür angeordnet ist. Dabei ist die Seitentür insbesondere verschwenkbar an der Fahrzeugkarosserie befestigt. Ferner ist an der B-Säule ein in Fahrzeuglängsrichtung nach vorne in Richtung der Seitentür hervorragendes Formschlusselement vorgesehen, welches derart dimensioniert und angeordnet ist, dass das Formschlusselement bei einer crashbedingten Verlagerung des Türbrüstungsrohres in Fahrzeuglängsrichtung nach hinten von einem rückseitigen Ende des Türbrüstungsrohres mindestens teilweise umschließbar ist, um ein seitliches Abgleiten des Türbrüstungsrohres in Fahrzeugquerrichtung zu verhindern. Diese Gestaltung ermöglicht es, ein Abgleiten der Seitentür in einem Crashfall, insbesondere wenn es sich um einen Crash mit geringfügiger Überlappung (small overlap crash) handelt, auf einfache Art und Weise zu vermeiden.

In einer praktischen Ausführungsform eines erfindungsgemäßen Fahrzeugs weist zumindest das rückseitige Ende des Türbrüstungsrohres ein geschlossenes Querschnittsprofil auf. In diesem Zusammenhang wird insbesondere auf Profilelemente mit einem o-förmigen, ovalen, rechteckigen oder anderweitig polygonförmigen geschlossenen Querschnittsprofil verwiesen. Ferner wird auf Profilelemente verwiesen, die über die gesamte Länge das gleiche Querschnittsprofil aufweisen und somit einfach und kostengünstig herstellbar sind. Geschlossene Querschnittsprofile haben den Vorteil, dass das Querschnittsprofil selbst bei crashbedingter Verlagerung in Fahrzeuglängsrichtung nach hinten so ausgerichtet sein kann, dass ein Formschlusselement, vollständig von dem rückseitigen Ende des Türbrüstungsrohres umschlossen wird. Dann wird das Türbrüstungsrohr mittels des Formschlusselements nicht nur vor einem Abgleiten in Fahrzeugquerrichtung nach außen bewahrt, sondern in Fahrzeugquerrichtung nach innen und nach außen sowie in Fahrzeughochrichtung nach oben und nach unten.

Vorzugsweise ist das gesamte Türbrüstungsrohr konstruktiv einfach gestaltet und aus einem durchgehenden Rohr mit einem geschlossenen Querschnittsprofil gebildet, das sich über die gesamte Rohrlänge erstreckt. Besonders bevorzugt weist das Türbrüstungsrohr über die gesamte Länge das gleiche Querschnittsprofil auf.

In einer weiteren praktischen Ausführungsform eines erfindungsgemäßen Fahrzeugs ist das Formschlusselement ein einstückig an der B-Säule ausgebildetes und/oder ein die B-Säule nicht durchdringendes Element. Sofern es sich um ein die B-Säule nicht durchdringendes Element handelt, handelt es sich vorzugsweise um ein Fügeelement, das mit der B-Säule verbunden ist. Dabei ist es bevorzugt, dass das Fügeelement die B-Säule nicht durchdringt und somit die Biegesteifigkeit der B-Säule nicht verringert.

Im Zusammenhang mit einem die B-Säule nicht durchdringenden Element wird insbesondere auf die Möglichkeit verwiesen, als Formschlusselement ein Reibschweißelement einzusetzen. Insbesondere hat sich ein metallisches Reibschweißelement als besonders geeignet erwiesen, das durch Reibschweißen mit einem - vorzugsweise ebenfalls metallischen - Element der B-Säule fest verbunden sind.

Besondere Vorteile ergeben sich dann, wenn die Anordnung eines solchen Reibschweißelements - oder eines anderen Fügeelements - ohnehin erforderlich ist und das Element damit für die erfindungsgemäße formschlüssige Verbindung durch Anordnung an einer geeigneten Stelle mitgenutzt werden kann. Das Fahrzeug weist dann trotz des zusätzlichen Nutzens des Reibschweißelements - oder anderen Fügeelements - kein zusätzliches Gewicht auf.

Wenn die B-Säule durch mindestens zwei fest miteinander verbundene Elemente gebildet ist, wobei das Formschlusselement fest mit einem der Elemente verbunden oder einstückig an diesem ausgebildet ist, kann das Formschlusselement für weitere Funktionen genutzt werden. In diesem Zusammenhang wird insbesondere auf B-Säulen verwiesen, die aus einer Grundstruktur und ein oder mehreren Verstärkungselementen gebildet ist, die fest mit der Grundstruktur verbunden sind, insbesondere durch Verkleben. In diesem Fall kann das Formschlusselement, insbesondere wenn es als Reibschweißelement ausgebildet ist, zusätzlich genutzt werden, um zwei miteinander verklebte Elemente aneinander zu halten und somit den Aushärteprozess einer Klebung zu unterstützen.

In einer weiteren praktischen Ausführungsform weist das Formschlusselement einen Halsabschnitt und einen Kopfabschnitt auf, wobei der Halsabschnitt das in Fahrzeuglängsrichtung betrachtet vordere Element durchdringt und der Kopfabschnitt außenseitig auf dem vorderen Element aufliegt. In diesem Fall kann mit dem Kopfabschnitt einerseits die vorstehend erwähnte Klemmung bewirkt werden. Weiterhin kann der Kopfabschnitt als Formschlusselement dienen, wenn dieser einen Vorsprung bildet, der innerhalb einer in Erstreckungsrichtung des Türbrüstungsrohres in Fahrtrichtung nach hinten projizierten rückseitigen Öffnung des Türbrüstungsrohres angeordnet ist, wie vorstehend erwähnt.

Die Erfindung wurde insbesondere in Verbindung mit Fahrzeugen gemacht, bei welchen ein Element der B-Säule aus einem metallischen Werkstoff und das andere Element aus einem nicht-metallischen Werkstoff hergestellt ist, wobei die Elemente fest miteinander verbunden sind. In diesem Zusammenhang wird insbesondere auf metallische Werkstoffe in Form von Stahlwerkstoffen und Aluminiumwerkstoffen verwiesen. In Bezug auf nicht-metallische Werkstoffe wird insbesondere auf Kunststoffe, vorzugsweise faserverstärkte Kunststoffe, verwiesen.

In einer weiteren praktischen Ausführungsform eines erfindungsgemäßen Fahrzeuges ist das Türbrüstungsrohr in Fahrzeuglängsrichtung betrachtet rückseitig von einem Türelement abgedeckt und/oder das Formschlusselement ist vorderseitig von einem Seitenteil abgedeckt. Mit anderen Worten ausgedrückt, sind das Türbrüstungsrohr und das Formschlusselement im endmontierten Zustand nicht im Sichtbereich des Fahrzeuges angeordnet. Bei dem Türelement und dem Seitenteil handelt es sich vorzugsweise um dünnwandige Bleche, insbesondere um umgeformte Bleche aus einem Stahlwerkstoff oder einem Aluminiumwerkstoff.

Wenn an dem rückseitigen Ende des Türbrüstungsrohres mindestens ein Durchstoß-Vorsprung vorgesehen ist, kann durch Anordnung des Durchstoß-Vorsprunges priorisiert werden, mit welcher Seite (beispielsweise mit der Innenseite oder der Außenseite) das rückseitige Ende des Türbrüstungsrohres ein Türelement und/oder ein Seitenteil zuerst kontaktiert und/oder durchstößt. Vorzugsweise ist ein Durchstoß-Vorsprung auf der Innenseite des Türbrüstungsrohres vorgesehen, wenn ein Abgleiten nach außen verhindert werden soll. Analog ist ein Durchstoß-Vorsprung auf der Außenseite des Türbrüstungsrohres vorgesehen, wenn ein Abgleiten nach innen verhindert werden soll. Soll also ein Abgleiten des Türbrüstungsrohres in Richtung der Außenseite eines Fahrzeuges verhindert werden, insbesondere weil die B-Säule in Fahrzeugquerrichtung betrachtet eine nach außen gerichtete Fläche aufweist, ist der Durchstoß-Vorsprung vorzugsweise auf der Innenseite des rückseitigen Endes des Türbrüstungsrohres angeordnet. Dies hat den Vorteil, dass der nach hinten hervorragende Durchstoß-Vorsprung mit dem Formschlusselement eine zur Vermeidung des Abgleitens vorteilhafte Erst-Kontaktierung bewirkt.

In einer weiteren praktischen Ausführungsform ist an dem Formschlusselement selbst mindestens ein, sich in Richtung der Seitentür nach vorne erstreckender Führungsvorsprung ausgebildet, der sich nur über einen Teil der Gesamtfläche des Formschlusselements erstreckt. Als ein solcher Führungsvorsprung kann insbesondere eine v-förmig, kegelartig, kegelstumpfartig oder anderweitig konisch ausgebildete Spitze vorgesehen sein, die eine Abgleitschräge aufweist, um Falle einer seitlichen Verschiebung oder eines Verschwenkens des Führungsrohres das rückseitige Ende so zu führen, dass das Formschlusselement bei einer crashbedingten Verlagerung des Türbrüstungsrohres in Fahrzeuglängsrichtung nach hinten in eine von dem rückseitigen Ende umschließenden Position zur Erzielung eines Formschlusses zwischen dem rückseitigen Ende und dem Formschlusselements bewegt wird.

Weitere praktische Ausführungsformen der Erfindung sind nachfolgend im Zusammenhang mit den Zeichnungen beschrieben. Es zeigen:
- Fig. 1: ein Kraftfahrzeug mit markiertem Türbrüstungsabschnitt und markierter B-Säule in einer Seitenansicht,
- Fig. 2: eine Darstellung des Tür-Innenelements mit Türbrüstungsrohr des Kraftfahrzeuges aus Figur 1,
- Fig. 3: eine isometrische Darstellung des hinteren Endes des Türbrüstungsrohres aus Fig. 2,
- Fig. 4: eine Seitenansicht der Seitentür und der die Seitentür unmittelbar umgehenden Bereiche einschließlich A-Säule und B-Säule,
- Fig. 5: eine isometrische Schnittdarstellung gemäß der Linie V-V in Figur 2 und
- Fig. 6: eine Horizontalschnittdarstellung durch den hinteren Abschnitt des Türbrüstungsrohres, den vorderen Abschnitt der B-Säule und das Formschlusselement.

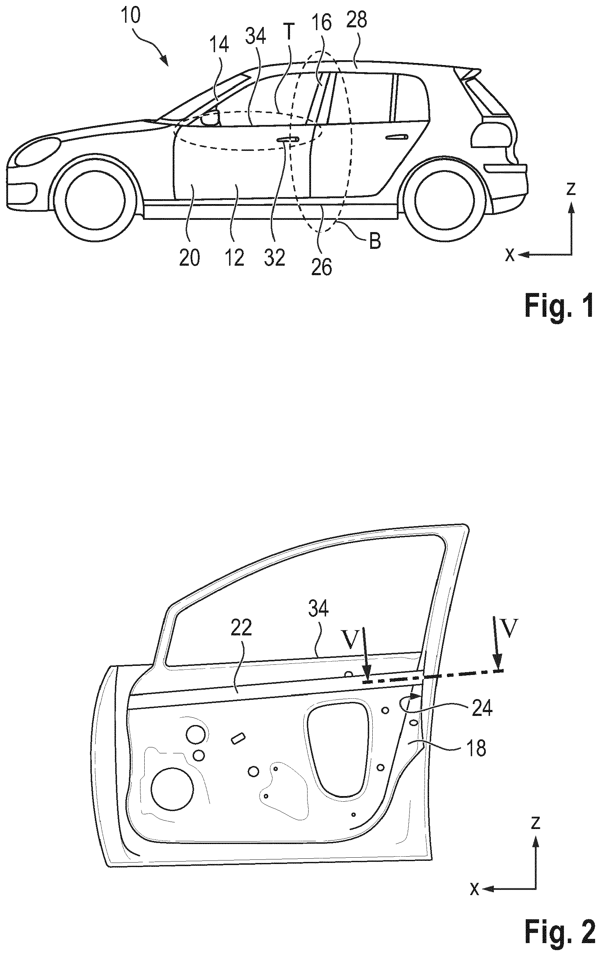

Figur 1 zeigt ein Kraftfahrzeug 10 in einer Seitenansicht. Eine vordere Seitentür 12 erstreckt sich von einer A-Säule 14 bis zu einer B-Säule 16. Die Fahrzeuglängsrichtung ist in Figur 1 und in allen folgenden Figuren im Rahmen von Koordinatensystemen mit x in Fahrtrichtung nach vorne, mit y in Fahrzeugquerrichtung und mit z in Fahrzeughochrichtung nach oben gekennzeichnet.

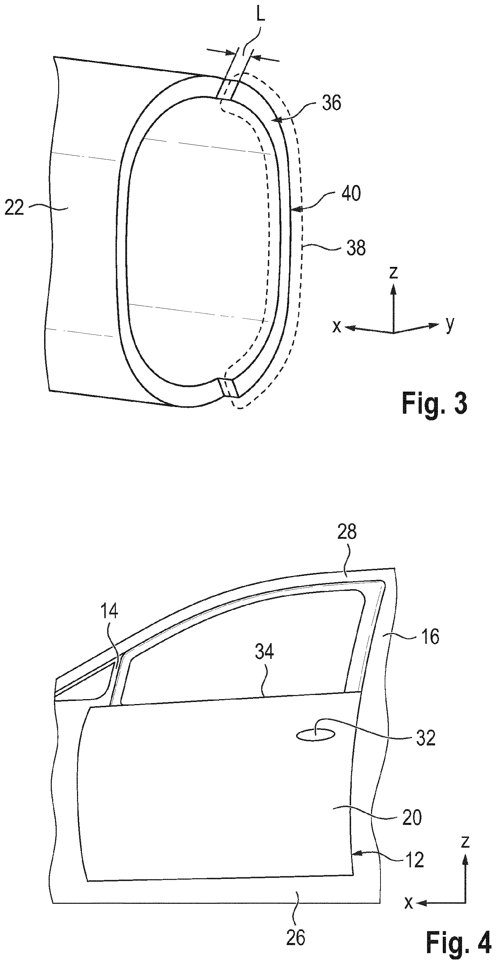

In dem mit T gekennzeichneten Bereich der vorderen Seitentür 12 ist zwischen einem Tür-Innenelement 18 (vgl. Fig. 2, 5 und 6) und einem Tür-Außenelement 20 (vgl. Figuren 1, 4) ein Türbrüstungsrohr 22 (vgl. Fig. 2, 5 und 6) angeordnet. Aus einer Zusammenschau der Figuren 1, 2, und 4 ist erkennbar, dass das Türbrüstungsrohr 22 unterhalb einer unteren Fensterlinie 34 im Wesentlichen in horizontaler Richtung orientiert in etwa auf Höhe eines Türgriffabschnitts 32 angeordnet ist, hier in Fahrzeughochrichtung (z-Richtung) betrachtet, zwischen dem Höhenniveau des Türgriffabschnitts 32 und dem Höhenniveau der unteren Fensterlinie 34.

In dem mit B gekennzeichneten Bereich ist die B-Säule 16 angeordnet. Die B-Säule 16 befindet sich in Fahrzeuglängsrichtung betrachtet im Bereich des rückseitigen Endes der vorderen Seitentür 12. Sie erstreckt sich von einem Seitenschweller 26 unterhalb der Seitentür 12 bis zu einem Dachschweller 28 oberhalb der Seitentür 12.

Wie in Figur 2 gut erkennbar ist, erstreckt sich das Türbrüstungsrohr 22 über einen Großteil der sich in Fahrzeuglängsrichtung (x-Richtung) erstreckenden Länge der Seitentür 12, hier über mehr als 90 Prozent der Länge der Seitentür 12.

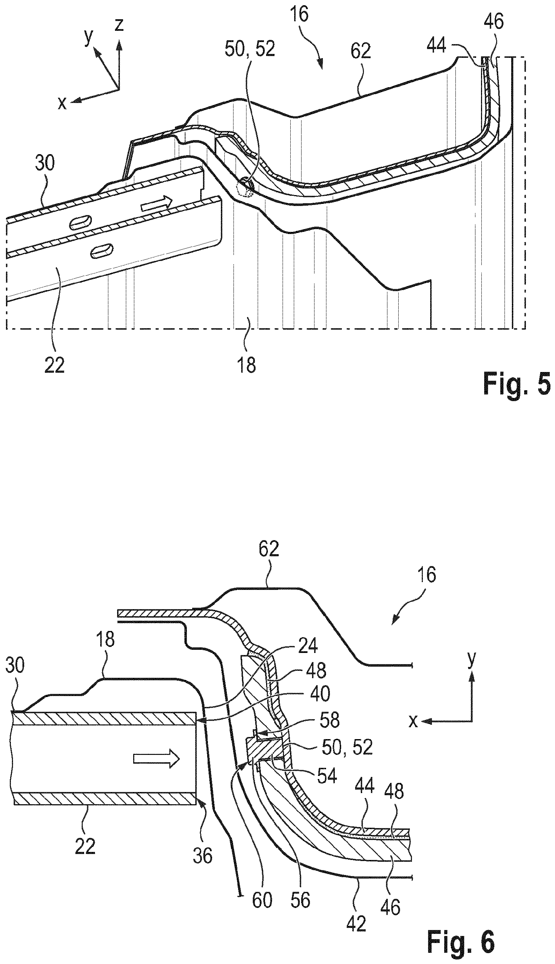

Aus einer Zusammenschau der Figuren 2 und 5 ist erkennbar, dass sich das Türbrüstungselement 22 mit seinem rückseitigen Ende 36 bis zu einer hinteren Querwand 24 der vorderen Seitentür 12 erstreckt. Die hintere Querwand 24 ist Teil des Tür-Innenelements 18, an welchem das Türbrüstungsrohr 22 teilweise unmittelbar anliegt. Das Türbrüstungsrohr 22 ist in der gezeigten Ausführungsform in mehreren solchen Bereichen, in welchen es an dem Tür-Innenelement 18 anliegt, befestigt. In der gezeigten Ausführungsform ist die Befestigung jeweils durch eine Schweißverbindung realisiert, wobei die Schweißverbindung bei der in Figur 6 gezeigten Ausführungsform in Form einer Schweißverbindung 30 realisiert ist.

In Figur 3 ist das rückseitige Ende 36 des Türbrüstungsrohres 22 in einer isometrischen Ansicht dargestellt. In dieser Figur ist gut erkennbar, dass das Türbrüstungsrohr 22 als Profilelement mit einem ovalen Querschnittsprofil ausgebildet ist. Das Querschnittsprofil ist in dieser Ausführungsform über die gesamte Länge des Türbrüstungsrohres 22 konstant.

Ferner ist in Figur 3 erkennbar, dass in dem gestrichelt umrandeten Bereich 38 an dem rückseitigen Ende 36 ein Durchstoß-Vorsprung 40 ausgebildet ist. Dieser erstreckt sich in Bezug zu dem Kraftfahrzeug 10 auf der Innenseite, d.h. auf der zur Mittel-Längsachse des Kraftfahrzeuges 10 gerichteten Seite, nahezu über die Hälfte des Umfangs und steht gegenüber dem übrigen Umfangsabschnitt des rückseitigen Endes 36 in Fahrzeuglängsrichtung (x-Richtung) nach hinten um die Länge L hervor. Auf die Funktion des Durchstoß-Vorsprungs 40 wird später in Verbindung mit den Figuren 5 und 6 noch im Detail eingegangen.

Figur 4 zeigt die Seitentür 12 mit dem Tür-Außenelement 20 und Teilen der in Fahrzeugquerrichtung (y-Richtung) dahinter befindlichen Fahrzeugkarosserie, insbesondere dem Seitenschweller 26, dem Dachschweller 28 und der B-Säule 16. Eine isometrische Schnittdarstellung gemäß den Linien V-V in Figur 4 ist in Figur 5 gezeigt. Figur 6 zeigt einen Großteil der gleichen Anordnung aus Figur 5 in einer Horizontalschnittdarstellung.

Anhand der Figuren 5 und 6 wird im Folgenden das erfindungsgemäße Zusammenwirken zwischen Türbrüstungsrohr 22 und einem im Bereich der B-Säule 16 angeordneten Formschlusselement 50 erläutert. Das Zusammenwirken betriff nur Fälle, in welchen das Türbrüstungsrohr 22 - beispielsweise crashbedingt - in Fahrzeuglängsrichtung gemäß dem Pfeil C in den Figuren 5 und 6 nach hinten verschoben wird und sich in Richtung des Formschlusselements 50 bewegt.

Aus den Figuren 5 und 6 ist ersichtlich, dass das Türbrüstungsrohr 22 mit seinem rückseitigen Ende 36 nahezu bis zu einer Querwand 24 des Tür-Innenelements 18 reicht. In Fahrzeuglängsrichtung (x-Richtung) dahinter erstreckt sich ein Seitenteil 42, das die B-Säule 16 teilweise abdeckt, hier im Wesentlichen vorderseitig und außenseitig. Die B-Säule 16 ist in der gezeigten Ausführungsform gebildet durch eine Grundstruktur 44 und ein Verstärkungselement 46. Die Grundstruktur 44 ist gebildet aus einem metallischen Umformelement, hier einem warmumgeformten Stahl- oder Aluminiumelement. Dieses ist fest verbunden mit einem Verstärkungselement 46 aus Kunststoff, insbesondere aus faserverstärktem Kunststoff. Die Verbindung zwischen der Grundstruktur 44 und dem Verstärkungselement 46 ist in der gezeigten Ausführungsform mittels eines vollflächig aufgebrachten Klebstoffs 48 realisiert. Als Formschlusselement 50 ist ein Reibschweißelement 52 fest mit der Grundstruktur 44 verbunden, hier durch Fügen mittels Reibschweißen.

Das Reibschweißelement 52 weist einen das Verstärkungselement 46 durchdringenden Halsabschnitt 54 und einen Kopfabschnitt 56 auf, wobei sich der Kopfabschnitt 56 an den Halsabschnitt 54 anschließt. Ferner weist der Kopfabschnitt 56 eine außenseitig auf der der Grundstruktur 44 gegenüberliegenden Seite des Verstärkungselement 46 anliegende Anlagefläche 58 auf. Als Führungsvorsprung 60 ist an dem Kopf des Reibschweißelements 52 eine kegelstumpfartige Spitze ausgebildet.

Wie aus Figur 6 erkennbar ist, erstreckt sich die kegelstumpfartige Spitze in der gezeigten Ausführungsform nur über einen Teil der Gesamtfläche des Kopfabschnitts 56, wobei der schräge Teil des Kegelstumpfs als Abgleitschräge dient.

Es ist alternativ auch möglich, die Abgleitschräge so zu gestalten, dass sich diese über die Gesamtfläche des Kopfabschnitts 56 derart erstreckt, dass bei direktem Kontakt des rückseitigen Endes 36 eines Türbrüstungsrohres 22 oder bei mittelbarer Berührung über eine Querwand 24 und/oder ein Seitenteil 42 die Abgleitschräge zu einer formschlüssigen Anordnung aus dem rückseitigen Ende 36 und dem Formschlusselement 50 derart führt, dass das rückseitige Ende 36 aufgrund einer Anordnung des Formschlusselements 50 innerhalb des geschlossenen Profilquerschnitts ein Abgleiten des Türbrüstungsrohres 22 formschlüssig vermieden wird. Im vorliegenden Fall wird aufgrund der Ausbildung des Durchstoß-Vorsprungs 40 auf der Fahrzeuginnenseite bevorzugt einem Abgleiten nach außen entgegengewirkt.

Der Vollständigkeit halber wird noch darauf hingewiesen, dass die B-Säule in der gezeigten Ausführungsform noch ein Innenelement 62 aufweist, das fest mit der Grundstruktur 44 verbunden ist, hier durch Verschweißen.

Ferner wird darauf hingewiesen, dass - mit Ausnahme des Verstärkungselements 46 - alle Elemente vorzugsweise aus einem metallischen Werkstoff hergestellt sind, insbesondere aus einem Stahl- oder Aluminiumwerkstoff.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung kann im Rahmen der Ansprüche und unter Berücksichtigung der Kenntnisse des zuständigen Fachmanns variiert werden.

Insbesondere können als Durchstoß-Vorsprung 40 auch sich teilweise oder vollständig über den Umfang verteilte Spitzen oder andere Geometrien vorgesehen sein, die ein Durchstoßen der Querwand 24 und/oder des Seitenteils 42 begünstigen.

### Bezugszeichenliste

- 10: Kraftfahrzeug
- 12: Seitentür
- 14: A-Säule
- 16: B-Säule
- 18: Tür-Innenelement
- 20: Tür-Außenelement
- 22: Türbrüstungsrohr
- 24: Querwand (hier des Tür-Innenelements)
- 26: Seitenschweller
- 28: Dachschweller
- 30: Schweißverbindung
- 32: Türgriffabschnitt
- 34: untere Fensterlinie
- 36: rückseitiges Ende (des Türbrüstungsrohres)
- 38: gestrichelt umrandeter Bereich
- 40: Durchstoß-Vorsprung
- 42: Seitenteil
- 44: Grundstruktur
- 46: Verstärkungselement
- 48: Klebstoff
- 50: Formschlusselement
- 52: Reibschweißelement
- 54: Halsabschnitt
- 56: Kopfabschnitt
- 58: Anlagefläche
- 60: Führungsvorsprung
- 62: Innenelement

## Patentansprüche

1. Fahrzeug mit einer Fahrzeugkarosserie, die zumindest eine Seitentür (12) mit einem an der Seitentür (12) befestigten Türbrüstungsrohr (22) und eine im Wesentlichen vertikal ausgerichtete B-Säule (16) aufweist, wobei die B-Säule (16) beabstandet von der Seitentür (12) in Fahrzeuglängsrichtung (x-Richtung) betrachtet hinter der Seitentür (12) angeordnet ist,
**dadurch gekennzeichnet,**
**dass** an der B-Säule (16) ein in Fahrzeuglängsrichtung (x-Richtung) nach vorne in Richtung der Seitentür (12) hervorragendes Formschlusselement (50) vorgesehen ist, welches derart dimensioniert und angeordnet ist, dass das Formschlusselement (50) bei einer crashbedingten Verlagerung des Türbrüstungsrohres (22) in Fahrzeuglängsrichtung (z-Richtung) nach hinten von einem rückseitigen Ende (36) des Türbrüstungsrohres (22) mindestens teilweise umschließbar ist, um ein seitliches Abgleiten des Türbrüstungsrohres (22) in Fahrzeugquerrichtung (y-Richtung) zu verhindern.

2. Fahrzeug nach dem vorstehenden Anspruch, **dadurch gekennzeichnet, dass** zumindest das rückseitige Ende (36) des Türbrüstungsrohres (22) ein geschlossenes Querschnittsprofil aufweist.

3. Fahrzeug nach einem der vorstehenden Ansprüche, **dadurch gekennzeichnet, dass** das Formschlusselement (50) ein einstückig an der B-Säule (16) ausgebildetes und/oder ein die B-Säule (16) nicht durchringendes Element ist.

4. Fahrzeug nach dem vorstehenden Anspruch, **dadurch gekennzeichnet, dass** das Formschlusselement (50) ein Reibschweißelement (52) ist.

5. Fahrzeug nach einem der vorstehenden Ansprüche, **dadurch gekennzeichnet, dass** die B-Säule (16) durch mindestens zwei fest miteinander verbundene Elemente gebildet ist, wobei das Formschlusselement (50) fest mit einem der Elemente verbunden oder einstückig an diesem ausgebildet ist.

6. Fahrzeug nach dem vorstehenden Anspruch, **dadurch gekennzeichnet, dass** das Formschlusselement (50) einen Halsabschnitt (54) und einen Kopfabschnitt (56) aufweist, wobei der Halsabschnitt (54) das in Fahrzeuglängsrichtung betrachtet vordere Element durchdringt und der Kopfabschnitt (56) außenseitig auf dem vorderen Element aufliegt.

7. Fahrzeug nach einem der beiden vorstehenden Ansprüche, **dadurch gekennzeichnet, dass** ein Element der B-Säule (16) aus einem metallischen Werkstoff und das andere Element aus einem nicht-metallischen Werkstoff hergestellt ist, wobei die Elemente fest miteinander verbunden sind.

8. Fahrzeug nach einem der vorstehenden Ansprüche, **dadurch gekennzeichnet, dass** das Türbrüstungsrohr (22) in Fahrzeuglängsrichtung betrachtet rückseitig von einem Türelement abgedeckt und/oder das Formschlusselement (50) vorderseitig von einem Seitenteil (42) abgedeckt ist.

9. Fahrzeug nach einem der vorstehenden Ansprüche, **dadurch gekennzeichnet, dass** an dem rückseitigen Ende (36) des Türbrüstungsrohres (22) mindestens ein Durchstoß-Vorsprung (40) vorgesehen ist.

10. Fahrzeug nach einem der vorstehenden Ansprüche, **dadurch gekennzeichnet, dass** an dem Formschlusselement (50) mindestens ein, sich in Richtung Seitentür (12) erstreckender Vorsprung ausgebildet ist, der sich nur über einen Teil der Gesamtfläche des Formschlusselements (50) erstreckt.
